# EUROPÄISCHE PATENTANMELDUNG

(11) **EP 1 684 264 A1**
(43) Veröffentlichungstag der Anmeldung: **26.07.2006**
(21) Anmeldenummer: 06001161.6
(22) Anmeldetag: 19.01.2006
(51) Int. Cl.: G10L 15/26, G10L 15/22, H04M 1/27

(54) **Handy und Verfahren zur Spracheingabe von text in ein solches**

(30) Priorität: 19.01.2005 DE 102005002474
(71) Anmelder: Obstfelder, Sigrid, 69250 Schönau (DE); Mierswa, Klaus, 68199 Mannheim (DE)
(72) Erfinder: Obstfelder, Günther, 69250 Schönau (DE)
(74) Vertreter: Mierswa, Klaus

(57) **Zusammenfassung**

Ein erfindungsgemäßes Handy weist einen Spracheingabebaustein zur Spracheingabe von Text in das Handy auf, Der Spracheingabebaustein ist an ein Mikrofon angeschlossen und imstande, einzeln nacheinander ausgesprochene Einzelbuchstaben über das Mikrofon zu erfassen, das hierbei von dem Mikrofon gelieferte Mikrofonsignal für jeden der einzeln ausgesprochenen Einzelbuchsfiaben einzeln zu digitalisieren und danach für jeden derselben einzeln auf den Grad der Übereinstimmung mit einem vorgegebenen Speicherinhalt eines Datenspeichers zu vergleichen, jeweils anhand dieses Vergleichs den betreffenden Einzelbuchstaben einzeln zu identifizieren, den identifizierten Einzelbuchstaben in einen diesem eindeutig zugeordneten Binärcode umzusetzen, welcher genau diesem Einzelbuchstaben entspricht, und den Binärcode jeweils über einen Ausgang auszugeben. Somit ist der Spracheingabebaustein einen Text aus gesprochenen Folgen von Einzelbuchstaben In Folgen von Binärcodes umzusetzen Imstande, welche den gesprochenen Folgen von Einzelbuchstaben jeweils genau entsprechen, wobei das Handy imstande ist, den so eingesprochenen Text als SMS-Nachricht zu versenden. Der verfügbare Zeichenumfang ist vorzugsweise auf 128 ASCII-Zelchen beschränkt.

## Beschreibung

### Technisches Gebiet:

Die Erfindung betrifft ein Handy und ein Verfahren zur Spracheingabe in ein solches sowie einen Spracheingabebaustein und ein Verfahren zur Spracheingabe in einen solchen.

### Stand der Technik:

Aus der DE 197 51 123 ist ein Telefon mit Sprachnamenwahl bekannt, bei welchem durch akustische Eingabe des Namens eines Netzteilnehmers automatisch eine Kommunikationsverbindung mit der diesem Namen zugeordneten Rufnummer eingeleitet wird.

Durch die WO 96/35207 ist eine Vorrichtung zur sprecherunabhängigen Sprachnamenwahl für Telekommunikations-Endeinrichtungen der eingangs genannten Gattung bekannt geworden. Diese weist einen Speicher für Rufnummern und Namen auf, in dem Namen sowie jeweils die damit assoziierte Rufnummer als ASCII-Text hinterlegt sind, einen Graphem-Phonem-Umsetzer sowie einen phonembasierten Spracherkenner zum Vergleichen eines gesprochenen, digitalisierten Sprachsignals mit vorbestimmten digitalen Wortmodellen. Der Graphem-Phonem-Umsetzer erstellt aus dem Namen ein entsprechendes digitales Wortmodell, welches als digitales Sprachsignal dem Spracherkenner übermittelt und von diesem mit vorbestimmten Wortmodellen verglichen wird.

Die DE 38 37 385 A1 behandelt eine sprachbetätigte Wahleinrichtung für ein Telefon zur automatischen Herstellung einer Verbindung zu einem Teilnehmer, dessen Telefonnummer zuvor in der Wahleinrichtung gespeichert wurde.

Die US 5,040,212 bezieht sich auf das technische Gebiet der Stimmenerkennung in Anwendung auf Datenkommunikationssysteme. Der Grundgedanke besteht hierbei darin, einen Datensatz, der benötigt wird, um das mittels Stimmenerkennung zu bedienende Datenkommunikationssystem in die Lage zu versetzen, die Stimme eines Individuums zu erkennen, zunächst in einem tragbaren Programmiergerät zu speichern. Diese Prozedur wird für alle Individuen eines bestimmten Personenkreises wiederholt, wobei die zugehörigen Datensätze gesammelt werden. Soll nun ein bestimmtes Individuum mit dem Datenkommunikationssystem arbeiten, so wird zuvor der zugehörige Datensatz ausgewählt und selektiv an das Datenkommunikationssystem übertragen.

Die Veröffentlichung "Module zur Spracherkennung", in: Nachrichtentechnik, Elektronik, Berlin 42 (1992), von Dipl.-Ing. Joachim Zinke betrifft ein Verfahren zur Erkennung von Einzelwörtern, wobei Wortdaten zusammen mit ihrer Bedeutung als Referenz gespeichert sind. Die Referenz-Wortdaten werden hierbei durch Training, d.h. durch Vorsprechen erzeugt.

Die EP 0 562 138 A1 betrifft ein Verfahren zur automatischen Erstellung der phonetischen Transkription für ein Wort einer Sprache, ausgehend von der Orthographie und einem einmaligen Aussprechen des Wortes in dieser Sprache durch einen Sprecher. Die Orthographie des Wortes wird mittels einer Tastatur eingegeben. Die Mehrdeutigkeit der Zuordnung zwischen einem Wort und der zugehörigen Aussprache wird hierbei durch das einmalige Aussprechen des Wortes, also durch ein Training, verringert. Ziel ist es hierbei, die automatische Erstellung von Wortmodellen zu verbessern.

Die DE 44 27 444 A1 betrifft eine Einrichtung zur Sprachsteuerung von Anlagen und Geräten, insbesondere Autoradios, wobei auf einer Anzeigevorrichtung in Abhängigkeit vom Betriebszustand in Abhängigkeit vom Betriebszustand jeweils nur ein Teil der insgesamt vorgesehenen Befehle dargestellt wird und eine Eingabe durch Aussprache jeweils eines der dargestellten Befehle erfolgt.

Die DE 196 10 019 A1 betrifft ein digitales Sprachsyntheseverfahren, bei dem vorab Äußerungen einer Sprache aufgenommen, die aufgenommenen Äußerungen in Sprachsegmente geteilt und die Segmente bestimmten Phonem zuordbar abgespeichert werden, wobei dann jeweils ein als Sprache auszugebender Text in eine Phonemkette überführt wird und die abgespeicherten Segmente in einer durch diese Phonemkette definierten Reihenfolge aufeinanderfolgend ausgegeben werden.

Die WO 97/19545 betrifft ein Verfahren zur Konditionierung (training) eines Spracherkennungssystems zum Einsatz in der Sprachsteuerung eines Telekommunikationsnetzes durch Benutzer.

Den meisten aus dem Stand der Technik bekannten Systemen zur Spracherkennung ist der Nachteil gemeinsam, dass nur individuelle Sprecher, auf welche das System zuvor in einer umständlichen Trainingsprozedur eingelernt worden ist, mit befriedigend geringer Fehlerquote erkannt werden können, und dass sämtliche zu erkennenden Worte in einem Speicher hinterlegt sein müssen.

Sofern der erforderliche Wortschatz nicht von vornherein äußerst klein gehalten werden kann, was in der Regel nur bei Spezialanwendungen z.B. zur Steuerung von Geräten mit sehr begrenztem Befehlsumfang (z.B. "ein", "aus", "links", rechts") möglich ist, ist der zum Betreiben eines solchen Spracherkennungssystems erforderliche Speicher- und Rechenaufwand sehr groß und wächst mit zunehmendem Wortschatz sehr schnell an. Um eine ausreichende Verarbeitungsgeschwindigkeit zu erreichen, sind schnelle und damit teure Komponenten erforderlich. Zur Erkennung von Eigennahmen kann ferner das Anlegen einer Onomastika-Datenbank erforderlich sein.

Wenn zusätzlich Worte in Fremdsprachen implementiert werden sollen, erhöht dies den Aufwand drastisch. Systeme, welche den Nachteil der Beschränkung auf individuelle Sprecher zu überwinden versuchen, benötigen hierzu eine noch wesentlich umfangreichere Trainingsprozedur und/oder einen erheblichen Zusatzaufwand an Hardware, Software und Speicher.

Im Stand der Technik ist es ferner bekannt, Einzelbuchstaben voneinander handschriftlich auf ein Blatt Papier zu schreiben und dieses auf einen Scanner aufzulegen, wobei die Einzelbuchstaben von einem Computer eingelesen und erkannt werden; derartige Systeme bildeten Vorläufer der OCR-Systeme und realisieren keine Spracheingabe.

Die Implementierung einer Sprachsteuerung in elektronische Geräte wie z.B. Computer oder Telefone gestaltet sich somit im Stand der Technik als sehr aufwendig und damit teuer, wobei mit zunehmendem Wortschatz der Aufwand und die Kosten und ebenso die Anfälligkeit für Fehlerkennung schnell zunehmen.

Der Erfindung liegt daher die Aufgabe zu Grunde, ein Handy sowie ein Verfahren zum Betreiben eines solchen zu schaffen, welches mit einfachen Mitteln eine Spracheingabe bei äußerst niedriger Fehlerquote sowie eine weitestgehender Unabhängigkeit vom individuellen Sprecher ermöglicht, wobei gleichzeitig der verwendbare Wortschatz prinzipbedingt unbegrenzt ist und auch Eingaben in Fremdsprache ohne jeden Zusatzaufwand möglich sind.

Der Erfindung liegt ferner die Aufgabe zu Grunde, einen unkomplizierten Spracheingabebaustein sowie ein Verfahren zur Spracheingabe in einen solchen zu schaffen, welche mit sehr geringem Aufwand auskommen und dennoch eine äußerst niedriger Fehlerquote gewährleisten sowie eine weitestgehende Unabhängigkeit vom individuellen Sprecher ermöglichen, wobei gleichzeitig der verwendbare Wortschatz prinzipbedingt unbegrenzt ist und auch Eingaben in Fremdsprache ohne jeden Zusatzaufwand möglich sind.

Die Aufgabe wird gelöst durch ein Handy, welches einen Spracheingabebaustein zur Spracheingabe von Text in das Handy aufweist, welcher Spracheingabebaustein an das Mikrofon des Handys oder ein anders Mikrofon angeschlossen und imstande ist,
- einzeln nacheinander ausgesprochene Einzelbuchstaben über das Mikrofon zu erfassen,
- das hierbei von dem Mikrofon gelieferte Mikrofonsignal für jeden der einzeln ausgesprochenen Einzelbuchstaben einzeln zu digitalisieren und danach für jeden derselben einzeln auf den Grad der Übereinstimmung mit einem vorgegebenen Speicherinhalt eines Datenspeichers zu vergleichen,
- jeweils anhand dieses Vergleichs den betreffenden Einzelbuchstaben einzeln zu identifizieren,
- den identifizierten Einzelbuchstaben in einen diesem eindeutig zugeordneten Binärcode umzusetzen, welcher genau diesem Einzelbuchstaben entspricht,
- und den Binärcode jeweils über einen Ausgang auszugeben,
so dass der Spracheingabebaustein einen Text aus gesprochenen Folgen von Einzelbuchstaben in Folgen von Binärcodes umzusetzen imstande ist, welche den gesprochenen Folgen von Einzelbuchstaben jeweils genau entsprechen, wobei das Handy imstande ist, den so eingesprochenen Text als SMS-Nachricht, insbesondere an ein anderes Handy, zu versenden.

Die SMS-Nachricht ist bevorzugt an ein anderes Handy versendbar. Sie kann zusätzlich oder alternativ über das Festnetz an z.B. an ein Festnetztelefon oder an ein Computerfax versendbar sein.

Der Spracheingabebaustein des Handys kann insbesondere ein solcher gemäß einer der nachfolgend beschriebenen verschiedenen Varianten sein. Das Handy kann insbesondere unter Ausführung eines Verfahrens wie nachfolgend beschrieben betreibbar sein.

Die Aufgabe wird ferner gelöst durch ein Verfahren zum Betreben eines Handys, welches einen Spracheingabebaustein zur Spracheingabe von Text aufweist, welcher Spracheingabebaustein an das Mikrofon des Handys oder ein anders Mikrofon angeschlossen und imstande ist, wobei einzeln nacheinander Einzelbuchstaben in das Mikrofon gesprochen werden und mittels des Spracheingabebausteins
- einzeln nacheinander ausgesprochene Einzelbuchstaben über das Mikrofon erfasst werden,
- das hierbei von dem Mikrofon gelieferte Mikrofonsignal für jeden der einzeln ausgesprochenen Einzelbuchstaben einzeln digitalisiert und danach für jeden derselben einzeln auf den Grad der Übereinstimmung mit einem vorgegebenen Speicherinhalt eines Datenspeichers verglichen wird,
- jeweils anhand dieses Vergleichs der betreffende Einzelbuchstaben einzeln identifiziert und in einen diesem eindeutig zugeordneten Binärcode, insbesondere ASCII-Code, umgesetzt wird, welcher genau diesem Einzelbuchstaben entspricht,
- und den Binärcode jeweils über einen Ausgang ausgegeben wird,
so dass mittels des Spracheingabebausteins ein Text aus gesprochenen Folgen von Einzelbuchstaben in Folgen von Binärcodes umgesetzt wird, welche den gesprochenen Folgen von Einzelbuchstaben jeweils genau entsprechen und in dem Handy flüchtig oder dauerhaft gespeichert werden, wobei der so eingesprochene Text durch das Handy als SMS-Nachricht, insbesondere an ein anderes Handy, versandt wird.

Die SMS-Nachricht wird bevorzugt an ein anderes Handy versandt. Sie kann ferner oder alternativ auch an über das Festnetz an z.B. an ein Festnetztelefon oder an ein Computerfax versandt werden.

Gemäß einer bevorzugten Untervariante dieses Verfahrens wird das Handy unter Ausführung einer der nachfolgend beschriebenen Varianten des erfindungsgemäßen Verfahrens zur Spracheingabe in einen Spracheingabebaustein betrieben. Gemäß einer bevorzugten Variante wird als Spracheingabebaustein des Handys ein solcher gemäß einer der nachfolgend beschriebenen verschiedenen Varianten verwendet.

Die Aufgabe wird ferner erfindungsgemäß gelöst durch einen Spracheingabebaustein, welcher an ein Mikrofon angeschlossen ist, wobei der Spracheingabebaustein imstande ist,
- einzeln nacheinander ausgesprochene Einzelbuchstaben über das Mikrofon zu erfassen,
- das hierbei von dem Mikrofon gelieferte Mikrofonsignal für jeden der einzeln ausgesprochenen Einzelbuchstaben einzeln zu digitalisieren und danach für jeden derselben einzeln auf den Grad der Übereinstimmung mit einem vorgegebenen Speicherinhalt eines Datenspeichers zu vergleichen,
- jeweils anhand dieses Vergleichs den betreffenden Einzelbuchstaben einzeln zu identifizieren und in einen diesem eindeutig zugeordneten Binärcode, insbesondere ASCII-Code, umzusetzen, welcher genau diesem Einzelbuchstaben entspricht,
- und den Binärcode jeweils über einen Ausgang auszugeben,
so dass der Spracheingabebaustein einen Text aus gesprochenen Folgen von Einzelbuchstaben in Folgen von Binärcodes umzusetzen imstande ist, welche den gesprochenen Folgen von Einzelbuchstaben jeweils genau entsprechen.

Die Aufgabe wird ferner erfindungsgemäß gelöst durch ein Verfahren zur Spracheingabe von Text in einen Spracheingabebaustein, welcher an ein Mikrofon angeschlossen ist, wobei einzeln nacheinander Einzelbuchstaben in das Mikrofon gesprochen werden, wobei mittels des Spracheingabebausteins
- einzeln nacheinander ausgesprochene Einzelbuchstaben über das Mikrofon erfasst werden,
- das hierbei von dem Mikrofon gelieferte Mikrofonsignal für jeden der einzeln ausgesprochenen Einzelbuchstaben einzeln digitalisiert und danach für jeden derselben einzeln auf den Grad der Übereinstimmung mit einem vorgegebenen Speicherinhalt eines Datenspeichers zu verglichen wird,
- jeweils anhand dieses Vergleichs der betreffende Einzelbuchstaben einzeln identifiziert und in einen diesem eindeutig zugeordneten Binärcode, insbesondere ASCII-Code, umgesetzt wird, welcher genau diesem Einzelbuchstaben entspricht,
- und den Binärcode jeweils über einen Ausgang ausgegeben wird,
so dass mittels des Spracheingabebausteins ein Text aus gesprochenen Folgen von Einzelbuchstaben in Folgen von Binärcodes umgesetzt wird, welche den gesprochenen Folgen von Einzelbuchstaben jeweils genau entsprechen.

Die Einzelbuchstaben können gemäß einer bevorzugten Variante auch Umlaute sein.

Erfindungsgemäß kann also z.B. das Wort "HALLO" durch Spracheingabe eingegeben werden, indem einzeln nacheinander die Einzelbuchstaben H, A, L, L und O in das Mikrofon gesprochen werden. Das Wort "HALLO" braucht hierzu vorteilhafterweise von dem Spracheingabebaustein nicht erkannt zu werden, denn es genügt, dass dieser lediglich die Einzelbuchstaben des einzusprechenden Wortes erkennt. Der Aufwand an Hard- und Software sowie an CPU-Zeit kann auf diese Weise sehr gering gehalten werden.

Vorzugsweise ist der Spracheingabebaustein imstande, den Beginn der Aussprache eines zu erfassenden Einzelbuchstabens jeweils an einer vorausgehenden Pause zu erkennen, und/oder das Ende der Aussprache eines zu erfassenden Einzelbuchstabens jeweils an einer nachfolgenden Pause zu erkennen.

Gemäß einer bevorzugten Variante des Verfahrens wird daher mittels des Spracheingabebausteins der Beginn der Aussprache eines zu erfassenden Einzelbuchstabens jeweils an einer vorausgehenden Pause erkannt, und/oder das Ende der Aussprache eines zu erfassenden Einzelbuchstabens jeweils an einer nachfolgenden Pause erkannt.

Bevorzugt ist der Spracheingabebaustein imstande, alle einzeln ausgesprochenen Einzelbuchstaben des Alphabetes wenigstens einer Sprache zu erkennen. Als Spracheingabebaustein wird daher bevorzugt ein solcher verwendet, welcher imstande ist, alle Einzelbuchstaben des Alphabetes wenigstens einer Sprache zu erkennen, so dass beliebige Worte zumindest dieser Sprache einsprechbar sind.

Die Spracheingabe z.B. eines Textes bestehend aus dem Wort "ZYPERN" kann erfindungsgemäß z.B. in Schritten wie folgt ausführbar sein:
1. Aussprechen des Einzelbuchstaben Z: "ZETT"
2. Pause
   Wirkung: der Spracheingabebaustein identifiziert den Einzelbuchstaben Z.
3. Aussprechen des Einzelbuchstaben Y: "Üpsilon"
4. Pause
   Wirkung: der Spracheingabebaustein identifiziert den Einzelbuchstaben Y.
5. Aussprechen des Einzelbuchstaben P: "PEE"
6. Pause
   Wirkung: der Spracheingabebaustein identifiziert den Einzelbuchstaben P.
7. Aussprechen des Einzelbuchstaben E: "EE"
8. Pause
   Wirkung: der Spracheingabebaustein identifiziert den Einzelbuchstaben E.
9. Aussprechen des Einzelbuchstaben R: "ERR"
10. Pause
   Wirkung: der Spracheingabebaustein identifiziert den Einzelbuchstaben R.
11. Aussprechen des Einzelbuchstaben N: "ENN"
12. Pause
   Wirkung: der Spracheingabebaustein identifiziert den Einzelbuchstaben N.

Da mit ganz wenigen Ausnahmen wie z.B. der Aussprache des Buchstaben Y alle Spracheingaben von Einzelbuchstaben einsilbig sind, ist die Anfälligkeit für Fehlerkennung gering. Aus dem gleichen Grund ist die Abhängigkeit der Erkennung vom Sprecher gering, weil Einzelbuchstaben in der Regel von den meisten Sprechern sehr ähnlich ausgesprochen werden und individuelle Ausspracheunterschiede hier nur gering ausgeprägt sind.

Da alle Worte aus Einzelbuchstaben zusammengesetzt sind, besteht vorteilhafterweise prinzipbedingt keine Begrenzung des verwendbaren Wortschatzes. Aus dem gleichen Grund können ohne weiteres auch Eingaben in Fremdsprache erfolgen. Ferner besteht - anders als im Stand der Technik - keine Gefahr, dass ein Wort wegen falscher oder von der Regel abweichender Aussprache des Wortes nicht erkannt wird.

Der Vergleich zwischen Mikrofonsignal und Speicherinhalt kann z.B. anhand des zeitlichen Verlaufes des Fourier-Spektrums (Frequenzverteilung) vorgenommen werden, wobei für jeden erkennbaren Buchstaben ein Muster-Zeitverlauf eines Fourier-Spektrums im Speicher hinterlegt sein kann und derjenige Buchstabe als identifiziert gilt, bei dem die beste Übereinstimmung erreicht wird. Um der Verschiedenartigkeit der individuellen Stimmen der Benutzer, z.B. Männerstimme, Frauenstimme, verschiedenen Aussprache-Varianten usw. Rechnung zu tragen, kann alternativ für jeden erkennbaren Buchstaben eine Vielzahl von verschiedenen Muster-Zeitverläufen von Fourier-Spektren im Speicher hinterlegt sein und derjenige Buchstabe als identifiziert gelten, bei dem die beste Übereinstimmung mit einem der Muster-Zeitverläufe erreicht wird. Auf diese Weise kann eine weitgehende Sprecherunabhängigkeit erreicht werden. Ebenso kann ein Training des Spracheingabebausteins vorgesehen sein.

Selbstverständlich kann vorgesehen sein, dass der Spracheingabebaustein die Annahme eines Buchstaben verweigert, wenn selbst die beste Übereinstimmung einen vorgegebenen Mindestwert nicht erreicht; in diesem Fall kann z.B. automatisch eine Warnmeldung oder eine Aufforderung zur Wiederholung ausgegeben werden.

Ebenso kann die Spracheingabe von Zahlen vorgesehen sein. Eine Variante eines erfindungsgemäßen Spracheingabebausteins ist daher ferner imstande, einzeln nacheinander ausgesprochene einstellige Zahlen über das Mikrofon zu erfassen, das hierbei von dem Mikrofon gelieferte Mikrofonsignal für jede der einzeln ausgesprochenen einstelligen Zahlen einzeln zu digitalisieren und danach für jede derselben einzeln auf den Grad der Übereinstimmung mit einem vorgegebenen Speicherinhalt eines Datenspeichers zu vergleichen, jeweils anhand dieses Vergleichs die betreffende einstellige Zahl einzeln zu identifizieren und in einen dieser eindeutig zugeordneten Binärcode, insbesondere ASCII-Code, umzusetzen, welcher genau dieser einstelligen Zahl entspricht, und den Binärcode jeweils über den Ausgang auszugeben, so dass der Spracheingabebaustein gesprochene Folgen von Einzelbuchstaben und einstelligen Zahlen in Folgen von Binärcodes umzusetzen imstande ist, welche diesen gesprochenen Folgen jeweils genau entsprechen.

Gemäß einer Variante des Verfahrens werden daher mittels des Spracheingabebausteins ferner einzeln nacheinander ausgesprochene einstellige Zahlen über das Mikrofon erfasst, das hierbei von dem Mikrofon gelieferte Mikrofonsignal für jede der einzeln ausgesprochenen einstelligen Zahlen einzeln digitalisiert und danach für jede derselben einzeln auf den Grad der Übereinstimmung mit einem vorgegebenen Speicherinhalt eines Datenspeichers verglichen, jeweils anhand dieses Vergleichs die betreffende einstellige Zahl einzeln identifiziert und in einen dieser eindeutig zugeordneten Binärcode, insbesondere ASCII-Code, umgesetzt, welcher genau dieser einstelligen Zahl entspricht, und der Binärcode jeweils über den Ausgang ausgegeben, so dass mittels des Spracheingabebausteins gesprochene Folgen von Einzelbuchstaben und einstelligen Zahlen in Folgen von Binärcodes umgesetzt werden, welche diesen gesprochenen Folgen jeweils genau entsprechen.

Bevorzugt ist der Spracheingabebaustein imstande, alle einzeln ausgesprochenen einstelligen Zahlen in wenigstens einer Sprache zu erkennen. Als Spracheingabebaustein wird daher bevorzugt ein solcher verwendet, welcher imstande ist, alle einzeln ausgesprochenen einstelligen Zahlen in wenigstens einer Sprache zu erkennen, so dass beliebige Zahlen einsprechbar sind.

Die Spracheingabe eines Textes bestehend aus der zweistelligen Zahl 20 kann daher erfindungsgemäß erfolgen wie folgt:
1. Aussprechen der einstelligen Zahl 2: "ZWEI"
2. Pause
   Wirkung: der Spracheingabebaustein identifiziert die Zahl 2.
3. Aussprechen der einstelligen Zahl 0: "NULL"
4. Pause
   Wirkung: der Spracheingabebaustein identifiziert die Zahl 0.

Gemäß einer bevorzugten Variante eines Spracheingabebausteins ist wenigstens einem, bevorzugt mehreren sonstigen Zeichen, insbesondere Satzzeichen oder Steuerzeichen oder Leerzeichen, eine bestimmte Aussprache, z.B. "Punkt", "Komma", "Absatz" oder "Blank", zugeordnet, wobei der Spracheingabebaustein imstande ist, diese Aussprache über das Mikrofon zu erfassen, das hierbei von dem Mikrofon gelieferte Mikrofonsignal einzeln zu digitalisieren und danach einzeln auf den Grad der Übereinstimmung mit einem vorgegebenen Speicherinhalt eines Datenspeichers zu vergleichen, anhand dieses Vergleichs das sonstige Zeichen einzeln zu identifizieren und in einen diesem eindeutig zugeordneten Binärcode, insbesondere ASCII-Code, umzusetzen, welcher genau diesem sonstigen Zeichen entspricht, und den Binärcode jeweils über den Ausgang auszugeben, so dass der Spracheingabebaustein gesprochene Folgen von Einzelbuchstaben und dem wenigstens einen sonstigen Zeichen oder von Einzelbuchstaben, einstelligen Zahlen und dem wenigstens einen sonstigen Zeichen in Folgen von Binärcodes umzusetzen imstande ist, welche diesen gesprochenen Folgen jeweils genau entsprechen.

Gemäß einer bevorzugten Variante des Verfahrens wird daher wenigstens einem, bevorzugt mehreren sonstigen Zeichen, insbesondere Satzzeichen oder Steuerzeichen oder Leerzeichen, eine bestimmte Aussprache, z.B. "Punkt", "Komma", "Absatz" oder "Blank", zugeordnet, und mittels des Spracheingabebausteins diese Aussprache über das Mikrofon erfasst, das hierbei von dem Mikrofon gelieferte Mikrofonsignal einzeln digitalisiert und danach einzeln auf den Grad der Übereinstimmung mit einem vorgegebenen Speicherinhalt eines Datenspeichers verglichen, anhand dieses Vergleichs das sonstige Zeichen einzeln identifiziert und in einen diesem eindeutig zugeordneten Binärcode, insbesondere ASCII-Code, umgesetzt, welcher genau diesem sonstigen Zeichen entspricht, und der Binärcode jeweils über einen Ausgang ausgegeben wird, so dass mittels des Spracheingabebausteins gesprochene Folgen von Einzelbuchstaben und dem wenigstens einen sonstigen Zeichen oder von Einzelbuchstaben, einstelligen Zahlen und dem wenigstens einen sonstigen Zeichen in Folgen von Binärcodes umgesetzt werden, welche diesen gesprochenen Folgen jeweils genau entsprechen.

Gemäß einer weiteren bevorzugten Variante eines Spracheingabebausteins ist jedem ASCII-Zeichen eine bestimmte Aussprache zugeordnet und der Spracheingabebaustein imstande, diese Aussprache einzeln nacheinander ausgesprochener ASCII-Zeichen jeweils über das Mikrofon zu erfassen, das hierbei von dem Mikrofon gelieferte Mikrofonsignal für jeden der einzeln ausgesprochenen ASCII-Zeichen einzeln zu digitalisieren und danach für jedes derselben einzeln auf den Grad der Übereinstimmung mit einem vorgegebenen Speicherinhalt eines Datenspeichers zu vergleichen, anhand dieses Vergleichs das betreffende ASCII-Zeichen einzeln zu identifizieren und in einen diesem eindeutig zugeordneten Binärcode, insbesondere ASCII-Code, umzusetzen, welcher genau diesem ASCII-Zeichen entspricht, und den Binärcode jeweils über einen Ausgang auszugeben, so dass der Spracheingabebaustein gesprochene Folgen von ASCII-Zeichen in Folgen von Binärcodes umzusetzen imstande ist, welche diesen gesprochenen Folgen jeweils genau entsprechen.

Gemäß einer bevorzugten Variante wird daher jedem ASCII-Zeichen eine bestimmte Aussprache zugeordnet und mittels des Spracheingabebausteins diese Aussprache einzeln nacheinander ausgesprochener ASCII-Zeichen jeweils über das Mikrofon erfasst, das hierbei von dem Mikrofon gelieferte Mikrofonsignal für jeden der einzeln ausgesprochenen ASCII-Zeichen einzeln digitalisiert und danach für jedes derselben einzeln auf den Grad der Übereinstimmung mit einem vorgegebenen Speicherinhalt eines Datenspeichers verglichen, anhand dieses Vergleichs das betreffende ASCII-Zeichen einzeln identifiziert und in einen diesem eindeutig zugeordneten Binärcode, insbesondere ASCII-Code, umgesetzt wird, welcher genau diesem ASCII-Zeichen entspricht, und der Binärcode jeweils über einen Ausgang ausgegeben, so dass mittels des Spracheingabebausteins gesprochene Folgen von ASCII-Zeichen in Folgen von Binärcodes umgesetzt werden, welche diesen gesprochenen Folgen jeweils genau entsprechen.
Der erkennbare Zeichenumfang kann z.B. mit demjenigen des auf 256 Zeichen erweiterten ASCII-Codes identisch sein.

Gemäß einer bevorzugten Variante ist der Spracheingabebaustein imstande, den Beginn der Aussprache einer zu erfassenden einstelligen Zahl bzw. eines zu erfassenden ASCII-Zeichens bzw. sonstigen Zeichens jeweils an einer vorausgehenden Pause zu erkennen, und/oder das Ende der Aussprache einer zu erfassenden einstelligen Zahl bzw. eines zu erfassenden ASCII-Zeichens bzw. sonstigen Zeichens jeweils an einer nachfolgenden Pause zu erkennen.

Bevorzugt wird daher mittels des Spracheingabebausteins der Beginn der Aussprache einer zu erfassenden einstelligen Zahl bzw. eines zu erfassenden ASCII-Zeichens bzw. sonstigen Zeichens jeweils an einer vorausgehenden Pause erkannt, und/oder das Ende der Aussprache einer zu erfassenden einstelligen Zahl bzw. eines zu erfassenden ASCII-Zeichens bzw. sonstigen Zeichens jeweils an einer nachfolgenden Pause erkannt.

Bevorzugt ist der Spracheingabebaustein nicht imstande, andere Zeichen als Einzelbuchstaben oder einstellige Zahlen oder ASCII-Zeichen zu erkennen. Bevorzugt wird daher als Spracheingabebaustein ein solcher verwendet, welcher nicht imstande ist, andere Zeichen als Einzelbuchstaben oder einstellige Zahlen oder ASCII-Zeichen zu erkennen.

In diesem Fall kann der Spracheingabebaustein so einfach wie möglich aufgebaut sein, da die Zahl der von ihm erkennbaren Zeichen im Vergleich zur Zahl der erkennbaren Worte eines herkömmlichen Spracherkenners sehr klein ist.

Bevorzugt ist an den Spracheingabebaustein ein Display, insbesondere das Display eines Handys oder ein Monitor, angeschlossen, welches die erkannte Spracheingabe optisch als Text anzuzeigen imstande ist. Bevorzugt wird die erkannte Spracheingabe auf einem an den Spracheingabebaustein angeschlossen Display, insbesondere Display eines Handys oder Monitor, optisch als Text angezeigt. Der angezeigte Text besteht selbstverständlich bevorzugt aus der Umsetzung der Binärcodes zurück in die entsprechenden Buchstaben oder Zahlen oder sonstigen Zeichen. Auf die Anzeige von Steuerzeichen wird bevorzugt verzichtet.

Bevorzugt ist der eingesprochene Text mittels einer Tastatur, insbesondere der Tastatur eines Handys oder eines Computers, ergänzbar oder editierbar. Bevorzugt wird der eingesprochene Text bei Bedarf mittels einer Tastatur, insbesondere der Tastatur eines Handys oder eines Computers, ergänzt oder editiert.

Da erfindungsgemäße Spracheingabebausteine sehr einfach aufgebaut sein können, eigenen sie sich insbesondere zum Einsatz in Handys oder in Kombination mit Handys, beispielsweise zur schnellen und einfachen Eingabe von abzusendenden SMS-Nachrichten oder zum Eintragen von neuen Namen und Nummern in das Rufnummernverzeichnis des Handys oder zur automatischen Herstellung einer Telefonverbindung zu einer Rufnummer, welche per erfindungsgemäßer Spracheingabe anwählbar ist. Die Erfindung erspart eine Unzahl von Tastenbetätigungen; dies gilt insbesondere für die erfindungsgemäße Spracheingabe von abzusendenden SMS-Nachrichten in ein Handy.

Bevorzugt ist der Spracheingabebaustein über den Ausgang an eine EDV-Einrichtung, z.B. Computer, oder an ein Handy angeschlossen, wobei die Binärcodes über den Ausgang als Texteingabe an die EDV-Einrichtung oder als Eintrag in ein Rufnummernverzeichnis oder als über Mobilfunk zu versendende SMS-Nachricht an das Handy ausgebbar sind. Als Spracheingabebaustein wird bevorzugt ein solcher verwendet, welcher über den Ausgang an eine EDV-Einrichtung oder ein Handy angeschlossen ist, wobei die Binärcodes über den Ausgang als Texteingabe an die EDV-Einrichtung oder als Eintrag in ein Rufnummernverzeichnis oder als über Mobilfunk zu versendende SMS-Nachricht an das Handy ausgebbar sind.

Ebenso kann ein erfindungsgemäßer Spracheingabebaustein integraler Bestandteil eines Handys sein. Ein erfindungsgemäßer Spracheingabebaustein kann daher insbesondere als integraler Bestandteil eines Handys betrieben werden.

Bevorzugt weist der Spracheingabebaustein ein Vorwahlelement auf, welches wahlweise in einen betätigten oder in einen unbetätigten Zustand versetzbar ist, wobei der Spracheingabebaustein erkannte Einzelbuchstaben bei betätigtem Vorwahlelement als Großbuchstaben und bei unbetätigtem Vorwahlelement als Kleinbuchstaben interpretiert und ausgibt oder umgekehrt.

Bevorzugt wird daher ein Vorwahlelement verwendet, welches wahlweise in einen betätigten oder in einen unbetätigten Zustand versetzbar ist, wobei erkannte Buchstaben bei betätigtem Vorwahlelement als Großbuchstaben und bei unbetätigtem Vorwahlelement als Kleinbuchstaben interpretiert und ausgegeben werden oder umgekehrt.

Kurzbeschreibung der Zeichnung, in welcher zeigen:
- Fig. 1: einen erfindungsgemäßen Spracheingabebaustein, welcher einerseits an ein Mikrofon zur Spracheingabe, andererseits an ein Handy angeschlossen ist, welches die Spracheingaben an ein anderes Handy überträgt, und
- Fig. 2: den erfindungsgemäßen Spracheingabebaustein von Fig. 1, welcher einerseits an das Mikrofon von Fig. 2 und andererseits an einen Computer angeschlossen ist.

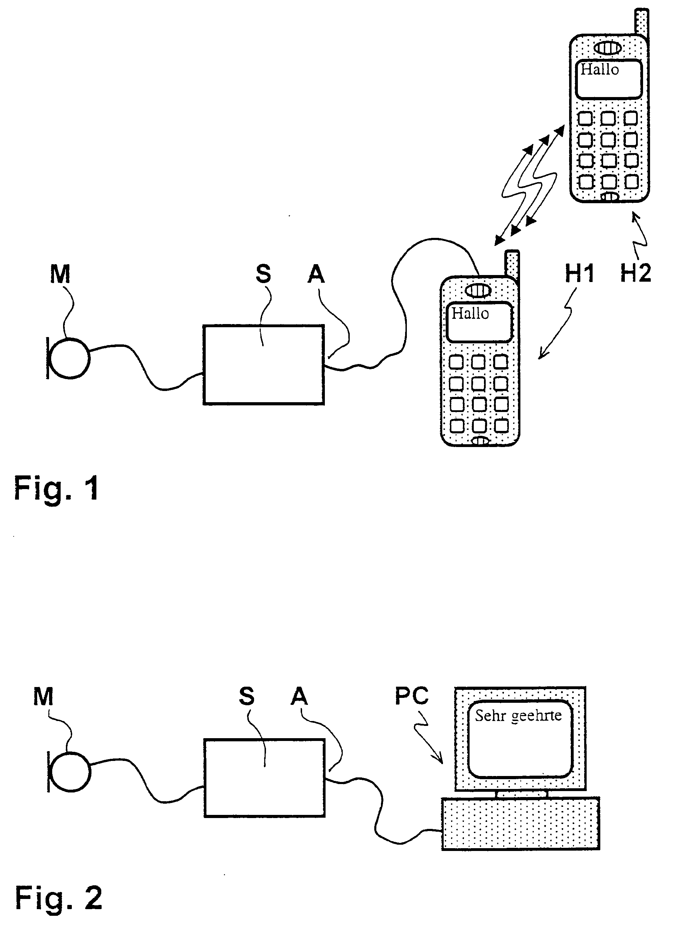

Der Spracheingabebaustein S von Fig. 1 ist über eine Leitung an ein Mikrofon M angeschlossen und erfindungsgemäß imstande, einen Text aus einzeln nacheinander ausgesprochenen Einzelbuchstaben über das Mikrofon M zu erfassen. Der Spracheingabebaustein S digitalisiert hierbei das von dem Mikrofon M gelieferte Mikrofonsignal für jeden der einzeln ausgesprochenen Einzelbuchstaben einzeln. Danach vergleicht er für jeden der erfassten Einzelbuchstaben einzeln den Grad der Übereinstimmung mit einem vorgegebenen Speicherinhalt eines Datenspeichers.

Jeweils anhand dieses Vergleichs identifiziert der Spracheingabebaustein S den betreffenden Einzelbuchstaben und setzt diesen um in einen diesem eindeutig zugeordneten Binärcode, insbesondere ASCII-Code, welcher genau diesem Einzelbuchstaben entspricht. Anschließend gibt der Spracheingabebaustein den so gewonnenen Binärcode jeweils über einen Ausgang A und eine weitere Leitung an ein Handy H1 auszugeben, welches zu diesem Zweck eine nicht gezeigte Schnittstelle aufweist. Bevorzugt wird hierbei die Standard-Schnittstelle des Handys H1 benutzt.

Somit ist der Spracheingabebaustein S imstande, einen Text aus gesprochenen Folgen von Einzelbuchstaben in Folgen von Binärcodes umzusetzen, welche den gesprochenen Folgen von Einzelbuchstaben jeweils genau entsprechen, und diese an das Handy zu übertragen. Gemäß einer vorteilhaften Variante wird als Mikrofon M das eingebaute Mikrofon des Handys H1 benutzt; die Schnittstelle des Handys H1 kann in diesem Fall vorteilhaft zur Ausgabe des analogen Mikrofonsignals imstande sein.

Gemäß einer weiteren Variante befindet sich der Spracheingabebaustein S im Inneren des Handys H1, so dass das dieses keine Schnittstelle nach außen aufzuweisen braucht.

Bevorzugt können mittels des Mikrofons M und des Spracheingabebausteins alle ASCII-Zeichen in das Handy eingesprochen werden, so dass die Spracheingabe aus beliebigen ASCII-Zeichenketten bestehen kann. Auf diese Weise können Texte in das Handy eingesprochen werden, welche z.B. per Mobilfunk als SMS an ein zweites Handy H2 gesendet werden sollen. Im Beispiel von Fig. 1 wurde das Wort "Hallo" in Form von Einzelbuchstaben in das Handy H1 eingesprochen und als SMS an das zweite Handy H1 gesandt.

Gegenüber einer herkömmlichen Texteingabe per Tastatur wird mit Hilfe der Erfindung eine erhebliche Ersparnis an Tastenbetätigungen und damit auch an Zeit erzielt.

Vorteilhafterweise können erfindungsgemäß beliebige Worte eingesprochen werden, da es auf das Verständnis dieser Worte, anders als bei herkömmlichen Spracherkennern, nicht ankommt. Es besteht somit bei der Erfindung von vornherein kein Bedürfnis, den verwendbaren Zeichenumfang über ein bestimmtes Maß, z.B. 128 oder 256 verschiedene ASCII-Zeichen, hinaus auszudehnen; eine Ausnahme hiervon kann in bestimmten Sprachen die zusätzliche Implementierung einiger weniger Sonderbuchstaben, z.B. Umlaute, bilden.

Aus diesem Grund kann der verfügbare Zeichenumfang sehr klein gehalten werden, was den Aufwand und damit auch die Kosten zur Realisierung eines erfindungsgemäßen Spracheingabebausteins minimiert. Aus dem selben Grund kann der Stromverbrauch eines erfindungsgemäßen Spracheingabebausteins klein gehalten werden, da die benötigte CPU-Zeit und der Umfang der Hardware ebenfalls gering ist. Ein erfindungsgemäßer Spracheingabebaustein eignet sich daher insbesondere zum Einsatz als integraler Bestandteil eines Handys.

In der Anordnung von Fig. 2 dient der Spracherkenner S zusammen mit dem Mikrofon M zur Spracheingabe in einen Computer PC. Hierdurch kann in vielen Fällen ein aufwendiges und damit teures Spracherkennungsprogramm eingespart werden.

Ein weiterer großer Vorteil der Erfindung liegt wegen der Beschränkung auf einen sehr begrenzten Zeichenumfang darin, dass die Gefahr von Fehleingaben und der Verwechslung von ähnlich klingenden Spracheingaben bei weitem geringer ist als bei der Verwendung herkömmlicher Spracherkennungssysteme, d.h. die Erfindung ermöglicht eine sehr hohe Betriebssicherheit. Dies kann z.B. bei Anwendung in Bereichen, etwa Fahrzeugen oder Flugzeugen, in denen Nebengeräusche eine hinreichend sichere herkömmliche Spracherkennung erschweren, aber dennoch eine sichere, weitgehend fehlerfreie Spracherkennung gewünscht oder erforderlich ist, von großem Vorteil sein.

Der Spracheingabebaustein ist somit imstande, alle einzeln ausgesprochenen einstelligen Zahlen in wenigstens einer Sprache zu erkennen. Wenigstens einem sonstigen Zeichen, insbesondere Satzzeichen oder Steuerzeichen oder Leerzeichen, ist eine bestimmte Aussprache, z.B. "Punkt", "Komma", "Absatz" oder "Blank", zugeordnet, und der Spracheingabebaustein imstande ist,
- diese Aussprache über das Mikrofon (M) zu erfassen,
- das hierbei von dem Mikrofon (M) gelieferte Mikrofonsignal einzeln zu digitalisieren und danach einzeln auf den Grad der Übereinstimmung mit einem vorgegebenen Speicherinhalt eines Datenspeichers zu vergleichen,
- anhand dieses Vergleichs das sonstige Zeichen einzeln zu identifizieren und in einen diesem eindeutig zugeordneten Binärcode, insbesondere ASCII-Code, umzusetzen, welcher genau diesem sonstigen Zeichen entspricht,
- und den Binärcode jeweils über den Ausgang (A) auszugeben,
so dass der Spracheingabebaustein (S) gesprochene Folgen von Einzelbuchstaben und dem wenigstens einen sonstigen Zeichen oder von Einzelbuchstaben, einstelligen Zahlen und dem wenigstens einen sonstigen Zeichen in Folgen von Binärcodes umzusetzen imstande ist, welche diesen gesprochenen Folgen jeweils genau entsprechen.

Jedem der ASCII-Zeichen ist eine bestimmte Aussprache zugeordnet und der Spracheingabebaustein imstande ist,
- diese Aussprache einzeln nacheinander ausgesprochener ASCII-Zeichen jeweils über das Mikrofon (M) zu erfassen,
- das hierbei von dem Mikrofon (M) gelieferte Mikrofonsignal für jeden der einzeln ausgesprochenen ASCII-Zeichen einzeln zu digitalisieren und danach für jedes derselben einzeln auf den Grad der Übereinstimmung mit einem vorgegebenen Speicherinhalt eines Datenspeichers zu vergleichen,
- anhand dieses Vergleichs das betreffende ASCII-Zeichen einzeln zu identifizieren und in einen diesem eindeutig zugeordneten Binärcode, insbesondere ASCII-Code, umzusetzen, welcher genau diesem ASCII-Zeichen entspricht,
- und den Binärcode jeweils über den Ausgang (A) auszugeben,
so dass der Spracheingabebaustein (S) gesprochene Folgen von ASCII-Zeichen in Folgen von Binärcodes umzusetzen imstande ist, welche diesen gesprochenen Folgen jeweils genau entsprechen.

Des Weiteren ist der Spracheingabebaustein (S) imstande,
- den Beginn der Aussprache einer zu erfassenden einstelligen Zahl bzw. eines zu erfassenden ASCII-Zeichens bzw. sonstigen Zeichens jeweils an einer vorausgehenden Pause zu erkennen, und/oder
- das Ende der Aussprache einer zu erfassenden einstelligen Zahl bzw. eines zu erfassenden ASCII-Zeichens bzw. sonstigen Zeichens jeweils an einer nachfolgenden Pause zu erkennen.

Vorteilhaft ist der Spracheingabebaustein (S) nicht imstande, andere Zeichen als Einzelbuchstaben oder einstellige Zahlen oder ASCII-Zeichen zu erkennen.

Der Spracheingabebaustein ist über den Ausgang (A) an eine EDV-Einrichtung (PC) oder ein Handy (H1) angeschlossen und die Binärcodes sind über den Ausgang (A) als Texteingabe an die EDV-Einrichtung (PC) oder als Eintrag in ein Rufnummernverzeichnis oder als über Mobilfunk zu versendende SMS-Nachricht an das Handy (H1) ausgebbar. Des Weiteren ist der Spracheingabebaustein integraler Bestandteil eines Handys.

Der Spracheingabebaustein kann ein Vorwahlelement aufweisen, welches wahlweise in einen betätigten oder in einen unbetätigten Zustand versetzbar ist, wobei der Spracheingabebaustein (S) erkannte Einzelbuchstaben bei betätigtem Vorwahlelement als Großbuchstaben und bei unbetätigtem Vorwahlelement als Kleinbuchstaben interpretiert und ausgibt oder umgekehrt.

Als Spracheingabebaustein (S) wird ein solcher verwendet, welcher imstande ist, alle Einzelbuchstaben des Alphabetes sowie alle einzeln ausgesprochenen einstelligen Zahlen wenigstens einer Sprache zu erkennen.

Verfahrensgemäß werden mittels des Spracheingabebausteins (S) ferner
- einzeln nacheinander ausgesprochene einstellige Zahlen über das Mikrofon (M) erfasst
- das hierbei von dem Mikrofon (M) gelieferte Mikrofonsignal für jede der einzeln ausgesprochenen einstelligen Zahlen einzeln digitalisiert und danach für jede derselben einzeln auf den Grad der Übereinstimmung mit einem vorgegebenen Speicherinhalt eines Datenspeichers verglichen werden,
- jeweils anhand dieses Vergleichs die betreffende einstellige Zahl einzeln identifiziert und in einen dieser eindeutig zugeordneten Binärcode, insbesondere ASCII-Code, umgesetzt wird, welcher genau dieser einstelligen Zahl entspricht,
- und der Binärcode jeweils über den Ausgang (A) ausgegeben wird,
so dass mittels des Spracheingabebausteins (S) gesprochene Folgen von Einzelbuchstaben und einstelligen Zahlen in Folgen von Binärcodes umgesetz werden, welche diesen gesprochenen Folgen jeweils genau entsprechen.

Verfahrensgemäß wird wenigstens einem sonstigen Zeichen, insbesondere Satzzeichen oder Steuerzeichen oder Leerzeichen, eine bestimmte Aussprache, z.B. "Punkt", "Komma", "Absatz" oder "Blank", zugeordnet, und mittels des Spracheingabebausteins
- diese Aussprache über das Mikrofon (M) erfasst,
- das hierbei von dem Mikrofon (M) gelieferte Mikrofonsignal einzeln digitalisiert und danach einzeln auf den Grad der Übereinstimmung mit einem vorgegebenen Speicherinhalt eines Datenspeichers verglichen,
- anhand dieses Vergleichs das sonstige Zeichen einzeln identifiziert und in einen diesem eindeutig zugeordneten Binärcode, insbesondere ASCII-Code, umgesetzt, welcher genau diesem sonstigen Zeichen entspricht,
- und der Binärcode jeweils über den Ausgang (A) ausgegeben,
so dass mittels des Spracheingabebausteins (S) gesprochene Folgen von Einzelbuchstaben und dem wenigstens einen sonstigen Zeichen oder von Einzelbuchstaben, einstelligen Zahlen und dem wenigstens einen sonstigen Zeichen in Folgen von Binärcodes umgesetzt werden, welche diesen gesprochenen Folgen jeweils genau entsprechen.

Somit wird jedem ASCII-Zeichen eine bestimmte Aussprache zugeordnet und mittels des Spracheingabebausteins
- diese Aussprache einzeln nacheinander ausgesprochener ASCII-Zeichen jeweils über das Mikrofon (M) erfasst,
- das hierbei von dem Mikrofon (M) gelieferte Mikrofonsignal wird für jeden der einzeln ausgesprochenen ASCII-Zeichen einzeln digitalisiert und danach für jedes derselben einzeln auf den Grad der Übereinstimmung mit einem vorgegebenen Speicherinhalt eines Datenspeichers verglichen,
- anhand dieses Vergleichs das betreffende ASCII-Zeichen einzeln identifiziert und in einen diesem eindeutig zugeordneten Binärcode, insbesondere ASCII-Code, umgesetzt, welcher genau diesem ASCII-Zeichen entspricht,
- und der Binärcode wird jeweils über den Ausgang (A) ausgegeben,
so dass mittels des Spracheingabebausteins (S) gesprochene Folgen von ASCII-Zeichen in Folgen von Binärcodes umgesetzt werden, welche diesen gesprochenen Folgen jeweils genau entsprechen.

Verfahrengemäß wird mittels des Spracheingabebausteins (S),
- der Beginn der Aussprache einer zu erfassenden einstelligen Zahl bzw. eines zu erfassenden ASCII-Zeichens bzw. sonstigen Zeichens jeweils an einer vorausgehenden Pause erkannt, und/oder
- das Ende der Aussprache einer zu erfassenden einstelligen Zahl bzw. eines zu erfassenden ASCII-Zeichens bzw. sonstigen Zeichens wird jeweils an einer nachfolgenden Pause erkannt.
   Vorteilhaft wird als Spracheingabebaustein (S) ein solcher verwendet, welcher nicht imstande ist, andere Zeichen als Einzelbuchstaben oder einstellige Zahlen oder ASCII-Zeichen zu erkennen.

Vorzugsweise wird der Spracheingabebaustein (S) als integraler Bestandteil eines Handys betrieben.

### Gewerbliche Anwendbarkeit:

Die Erfindung ist gewerblich anwendbar z.B. im Bereich der Telekommunikation, des Mobilfunks, dem sprachgesteuerten Betrieb von Geräten, Anlagen und Fahrzeugen sowie in der Computertechnik.

## Patentansprüche

1. Handy, **dadurch gekennzeichnet,**
**dass** dasselbe einen Spracheingabebaustein zur Spracheingabe von Text in das Handy aufweist, welcher Spracheingabebaustein an das Mikrofon des Handys oder ein anders Mikrofon (M) angeschlossen und imstande ist,
- einzeln nacheinander ausgesprochene Einzelbuchstaben über das Mikrofon (M) zu erfassen,
- das hierbei von dem Mikrofon (M) gelieferte Mikrofonsignal für jeden der einzeln ausgesprochenen Einzelbuchstaben einzeln zu digitalisieren und danach für jeden derselben einzeln auf den Grad der Übereinstimmung mit einem vorgegebenen Speicherinhalt eines Datenspeichers zu vergleichen,
- jeweils anhand dieses Vergleichs den betreffenden Einzelbuchstaben einzeln zu identifizieren,
- den identifizierten Einzelbuchstaben in einen diesem eindeutig zugeordneten Binärcode umzusetzen, welcher genau diesem Einzelbuchstaben entspricht,
- und den Binärcode jeweils über einen Ausgang (A) auszugeben,
so dass der Spracheingabebaustein (S) einen Text aus gesprochenen Folgen von Einzelbuchstaben in Folgen von Binärcodes umzusetzen imstande ist, welche den gesprochenen Folgen von Einzelbuchstaben jeweils genau entsprechen, wobei das Handy imstande ist, den so eingesprochenen Text als SMS-Nachricht, insbesondere an ein anderes Handy (H2), zu versenden.

2. Handy nach Anspruch 1, **dadurch gekennzeichnet,**
**dass** der Spracheingabebaustein (S) ein solcher gemäß einem der Ansprüche 4 bis 17 ist.

3. Handy nach Anspruch 1 oder 2, **dadurch gekennzeichnet,**
**dass** dasselbe unter Ausführung eines Verfahrens nach einem der Ansprüche 18 bis 34 betreibbar ist.

4. Spracheingabebaustein, welcher an ein Mikrofon angeschlossen ist, **dadurch gekennzeichnet,**
**dass** der Spracheingabebaustein (S) imstande ist,
- einzeln nacheinander ausgesprochene Einzelbuchstaben über das Mikrofon (M) zu erfassen,
- das hierbei von dem Mikrofon (M) gelieferte Mikrofonsignal für jeden der einzeln ausgesprochenen Einzelbuchstaben einzeln zu digitalisieren und danach für jeden derselben einzeln auf den Grad der Übereinstimmung mit einem vorgegebenen Speicherinhalt eines Datenspeichers zu vergleichen,
- jeweils anhand dieses Vergleichs den betreffenden Einzelbuchstaben einzeln zu identifizieren und in einen diesem eindeutig zugeordneten Binärcode, insbesondere ASCII-Code, umzusetzen, welcher genau diesem Einzelbuchstaben entspricht,
- und den Binärcode jeweils über einen Ausgang (A) auszugeben,
so dass der Spracheingabebaustein (S) einen Text aus gesprochenen Folgen von Einzelbuchstaben in Folgen von Binärcodes umzusetzen imstande ist, welche den gesprochenen Folgen von Einzelbuchstaben jeweils genau entsprechen.

5. Spracheingabebaustein nach einem der vorigen Ansprüche 1 bis 4, **dadurch gekennzeichnet,**
**dass** derselbe imstande ist,
- den Beginn der Aussprache eines zu erfassenden Einzelbuchstabens jeweils an einer vorausgehenden Pause zu erkennen, und/oder
- das Ende der Aussprache eines zu erfassenden Einzelbuchstabens jeweils an einer nachfolgenden Pause zu erkennen.

6. Spracheingabebaustein nach einem der vorigen Ansprüche, **dadurch gekennzeichnet, dass** derselbe imstande ist, alle einzeln ausgesprochenen Einzelbuchstaben des Alphabetes wenigstens einer Sprache zu erkennen.

7. Spracheingabebaustein nach einem der vorigen Ansprüche, **dadurch gekennzeichnet,**
**dass** derselbe ferner imstande ist,
- einzeln nacheinander ausgesprochene einstellige Zahlen über das Mikrofon (M) zu erfassen
- das hierbei von dem Mikrofon (M) gelieferte Mikrofonsignal für jede der einzeln ausgesprochenen einstelligen Zahlen einzeln zu digitalisieren und danach für jede derselben einzeln auf den Grad der Übereinstimmung mit einem vorgegebenen Speicherinhalt eines Datenspeichers zu vergleichen,
- jeweils anhand dieses Vergleichs die betreffende einstellige Zahl einzeln zu identifizieren und in einen dieser eindeutig zugeordneten Binärcode, insbesondere ASCII-Code, umzusetzen, welcher genau dieser einstelligen Zahl entspricht,
- und den Binärcode jeweils über den Ausgang (A) auszugeben,
so dass der Spracheingabebaustein (S) gesprochene Folgen von Einzelbuchstaben und einstelligen Zahlen in Folgen von Binärcodes umzusetzen imstande ist, welche diesen gesprochenen Folgen jeweils genau entsprechen.

8. Verfahren zum Betreiben eines Handys, **dadurch gekennzeichnet,**
**dass** dasselbe einen Spracheingabebaustein (S) zur Spracheingabe von Text aufweist, welcher Spracheingabebaustein (S) an das Mikrofon des Handys oder ein anders Mikrofon (M) angeschlossen und imstande ist, wobei einzeln nacheinander Einzelbuchstaben in das Mikrofon (M) gesprochen werden und mittels des Spracheingabebausteins (S)
- einzeln nacheinander ausgesprochene Einzelbuchstaben über das Mikrofon (M) erfasst werden,
- das von dem Mikrofon (M) gelieferte Mikrofonsignal für jeden der einzeln ausgesprochenen Einzelbuchstaben einzeln digitalisiert und danach für jeden derselben einzeln auf den Grad der Übereinstimmung mit einem vorgegebenen Speicherinhalt eines Datenspeichers zu verglichen wird,
- jeweils anhand dieses Vergleichs der betreffende Einzelbuchstaben einzeln identifiziert und in einen diesem eindeutig zugeordneten Binärcode, insbesondere ASCII-Code, umgesetzt wird, welcher genau diesem Einzelbuchstaben entspricht,
- und den Binärcode jeweils über einen Ausgang (A) ausgegeben wird, so dass mittels des Spracheingabebausteins (S) ein Text aus gesprochenen Folgen von Einzelbuchstaben in Folgen von Binärcodes umgesetzt wird, welche den gesprochenen Folgen von Einzelbuchstaben jeweils genau entsprechen und in dem Handy flüchtig oder dauerhaft gespeichert werden, wobei der so eingesprochene Text durch das Handy als SMS-Nachricht, insbesondere an ein anderes Handy (H2), versandt wird.

9. Verfahren zur Spracheingabe von Text in einen Spracheingabebaustein, welcher an ein Mikrofon angeschlossen ist, **dadurch gekennzeichnet,**
**dass** einzeln nacheinander Einzelbuchstaben in das Mikrofon (M) gesprochen werden, wobei mittels des Spracheingabebausteins (S)
- einzeln nacheinander ausgesprochene Einzelbuchstaben über das Mikrofon (M) erfasst werden,
- das hierbei von dem Mikrofon (M) gelieferte Mikrofonsignal für jeden der einzeln ausgesprochenen Einzelbuchstaben einzeln digitalisiert und danach für jeden derselben einzeln auf den Grad der Übereinstimmung mit einem vorgegebenen Speicherinhalt eines Datenspeichers zu verglichen wird,
- jeweils anhand dieses Vergleichs der betreffende Einzelbuchstaben einzeln identifiziert und in einen diesem eindeutig zugeordneten Binärcode, insbesondere ASCII-Code, umgesetzt wird, welcher genau diesem Einzelbuchstaben entspricht,
- und den Binärcode jeweils über einen Ausgang (A) ausgegeben wird, so dass mittels des Spracheingabebausteins (S) ein Text aus gesprochenen Folgen von Einzelbuchstaben in Folgen von Binärcodes umgesetzt wird, welche den gesprochenen Folgen von Einzelbuchstaben jeweils genau entsprechen.

10. Verfahren nach Anspruch 9, **dadurch gekennzeichnet,**
**dass** mittels des Spracheingabebausteins (S)
- der Beginn der Aussprache eines zu erfassenden Einzelbuchstabens jeweils an einer vorausgehenden Pause erkannt wird, und/oder
- das Ende der Aussprache eines zu erfassenden Einzelbuchstabens jeweils an einer nachfolgenden Pause erkannt wird.
